# EUROPÄISCHE PATENTSCHRIFT

(11) **EP 0 475 125 B1**
(45) Veröffentlichungstag und Bekanntmachung des Hinweises auf die Patenterteilung: **01.06.1994**
(21) Anmeldenummer: 91113825.3
(22) Anmeldetag: 17.08.1991
(51) Int. Cl.: F16H 35/02, F16H 7/10, B41F 13/00

(54) **Einstellvorrichtung zur Veränderung des Phasenwinkels zwischen einer Antriebswelle und einer Abtriebswelle eines Kettentriebes bei einer Bogendruckmaschine**
Adjusting device for the angle of phase between a driving and a driven shaft of a chain drive in a sheet-fed printing press
Système de réglage de l'angle de phase entre un arbre entraînant et un arbre entraîné d'une transmission par chaîne dans une presse à imprimer pour feuilles

(30) Priorität: 11.09.1990 DE 4028756
(43) Veröffentlichungstag der Anmeldung: 18.03.1992
(73) Patentinhaber: Heidelberger Druckmaschinen Aktiengesellschaft, D-69019 Heidelberg (DE)
(72) Erfinder: Thoma, Peter, W-6800 Mannheim 24 (DE)
(74) Vertreter: Stoltenberg, Heinz-Herbert Baldo

(56) Entgegenhaltungen:
- FR-A- 1 507 783
- US-A- 1 387 823
- US-A- 1 819 743
- US-A- 4 791 869

## Beschreibung

Die Erfindung bezieht sich auf eine Einstellvorrichtung zur Veränderung des Phasenwinkels zwischen einer Antriebswelle und einer Abtriebswelle eines Kettentriebes zwischen einem Bogenanleger und einem Druckwerk einer Bogendruckmaschine, welche die Gattungsmerkmale nach dem Oberbegriff des Patentanspruches 1 aufweist.

Durch eine solche Einstellvorrichtung ist die Phase zwischen dem Bogenanleger und dem Druckwerk stufenlos in Anpassung an unterschiedliche Betriebsbedingungen aufgrund unterschiedlicher Maschinenlaufgeschwindigkeiten einstellbar. Es kann dadurch insbesondere eine Voreilung des Bogens im Anleger erreicht werden, um bei höheren Geschwindigkeiten Verzögerungen in der Ankunft des Bogens auszugleichen, so daß die Bogenvorderkante die Vordermarken sicher erreicht hat, wenn die Querausrichtung erfolgt.

Dazu ist aus der US-A- 4,791,869 eine Einstellvorrichtung bekannt, bei der ein von innen gegen das Zugtrum wirksames Spannelement und ein von innen gegen das Lostrum wirksames Spannelement an einem gemeinsamen Schlitten angeordnet sind, der zum Zwecke der Phaseneinstellung etwa senkrecht zu einer Ebene verschiebbar ist, in der die Achsen der beiden Wellen liegen. Die beiden einerseits innen gegen das Zugtrum und andererseits innen gegen das Lostrum wirkenden Spannelemente sind durch eine Feder in Wirkungsrichtung vorgespannt.

Aus der US-A- 1,819,743 ist eine vergleichbare Einrichtung bekannt, bei der der Schlitten für die Einstellung auf seitlich angeordneten Stangen geführt ist und die Verstellung des Schlittens mittels einer verdrehbaren Spindel erfolgt, die ein Muttergewinde im Schlitten durchgreift.

Der Erfindung wurde die Aufgabe gestellt, eine Einstellvorrichtung für die Änderung des Phasenwinkels zwischen einer Antriebswelle und einer Abtriebswelle eines Kettentriebes zwischen einem Bogenanleger und einem Druckwerk einer Bogendruckmaschine mit verbesserter Funktion und höherer Genauigkeit in der Einhaltung des eingestellten Phasenwinkels vor allem bei hohen Maschinenlaufgeschwindigkeiten zu schaffen.

Diese Aufgabe wird erfindungsgemäß durch die Merkmale nach dem Kennzeichen des Patentanspruches 1 in Verbindung mit den Gattungsmerkmalen erreicht.

Durch diese Merkmale wird das Lostrum durch den zusätzlichen Kettenspanner mit einem vorgegebenen Umschlingungswinkel gegen das von innen auf das Lostrum einwirkende Spannelement gehalten. Der zusätzliche Kettenspanner ist in Verbindung mit dem von innen gegen das Lostrum wirksamen Spannelement in gewisser Weise als Kettenspeicher wirksam, durch den das Lostrum auch bei hohen Maschinenlaufgeschwindigkeiten unter gleichbleibender Spannung gehalten und jedweder Kettenlose aus dem Lostrum herausgenommen werden. Zur Erreichung dieses Zieles weist der zusätzliche Kettenspanner für das Lostrum zwei Spannelemente auf, die an den Enden eines gegenüber dem Schlitten verstellbaren Joches angeordnet sind und je auf einer Seite neben dem von innen wirksamen Spannelement von außen gegen das Lostrum wirken.

Es ist ein weiterer Vorteil der erfindungsgemäßen Ausbildung, daß die Kettenspeicherfunktion in beiden Verstellrichtungen über die Strecklage der Kette hinaus erhalten bleibt. Somit wird es möglich, die Kettenlose des Lostrums auch in maximalen Verstellpositionen herauszunehmen.

Bei einer vorteilhaften Ausführungsform sind die beiden Spannelemente des zusätzlichen Kettenspanners einerseits und das von innen gegen das Lostrum wirkende Spannelement andererseits durch eine Feder in ihrer jeweiligen Wirkungsrichtung vorbelastet, so daß unter der Wirkung dieser Federspannung eine gleichmäßige Straffung des Lostrums erreicht wird. Diese Federspannung kann zusätzlich einstellbar sein, um eine weitere Anpassung an unterschiedliche Betriebsbedingungen bei verschiedenen Maschinenlaufgeschwindigkeiten zu ermöglichen.

Die Patentansprüche 3 bis 7 enthalten weitere Merkmale zur vorteilhaften Ausgestaltung des Erfindungsgedankens. Eine besonders vorteilhafte Ausgestaltung ist im Anspruch 7 enthalten. Danach ist das Widerlager für die Feder am Gehäuse verstellbar und mit einem Muttergewinde auf einem Bolzengewinde der Spindel für die Schlittenverstellung angeordnet. Dabei weist jedoch das Muttergewinde des Widerlagers für die Feder eine von dem Gewinde für die Spindel zur Schlittenverstellung abweichende Steigung auf. Dadurch wird erreicht, daß die wirksame Einspannlänge der Feder zwischen dem Widerlager am Joch und dem Widerlager am Gehäuse während des ganzen Verstellbereichs nahezu konstant bleibt, so daß mit einer Schlittenverstellung für die Veränderung des Phasenwinkels nicht notwendigerweise eine Veränderung der Spannkraft der Feder verbunden ist.

Auf der beigefügten Zeichnung sind Ausführungsbeispiele der Erfindung teils schematisiert dargestellt.

Es zeigen:
- Fig. 1: eine schematische Seitenansicht des Antriebes einer Welle eines Bogenanlegers durch eine Welle eines Druckwerks mittels eines endlos umlaufenden Zugmittels,
- Fig. 2: in einem gegenüber der Figur 1 vergrößerten Maßstab eine Seitenansicht der Einstellvorrichtung zur Veränderung des Phasenwinkels,
- Fig. 3: eine Draufsicht auf die Anordnung nach Figur 2, teilweise im horizontalen Schnitt,
- Fig. 4: einen Schnitt nach der Linie IV - IV in Figur 2 und
- Fig. 5: einen der Figur 4 entsprechenden Teilschnitt eines modifizierten Ausführungsbeispiels in einem vergrößernden Maßstab.

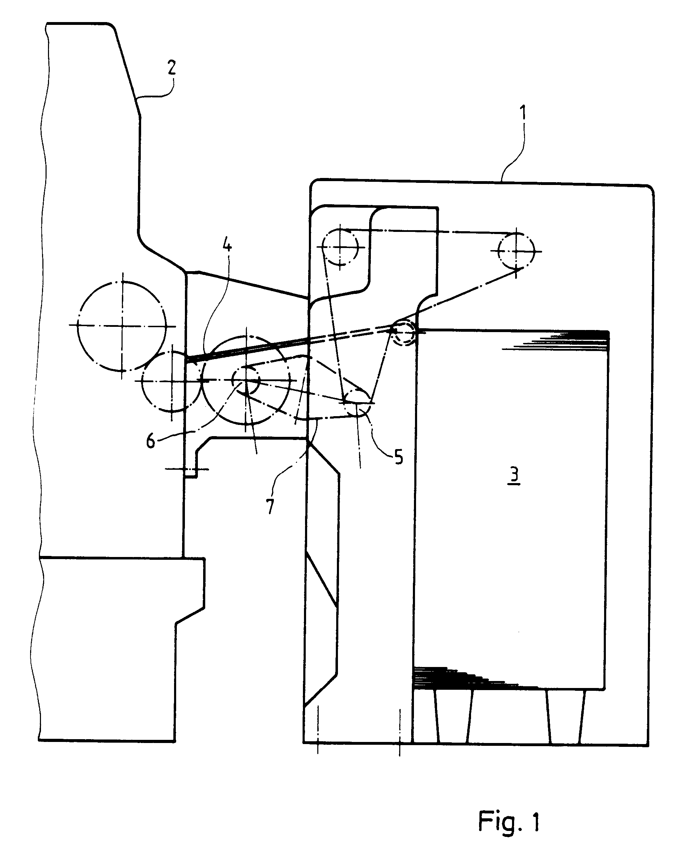

Die Darstellungen in den Figuren der Zeichnung beziehen sich auf die Antriebsseite einer Bogendruckmaschine. In der Figur 1 ist ein Anleger 1 vor einem ersten Druckwerk 2, welches nur teilweise dargestellt ist, angeordnet. Die vom Bogenstapel 3 im Anleger 1 abgehobenen Bogen werden über den Anlegetisch 4 dem ersten Druckwerk 2 zugeführt.

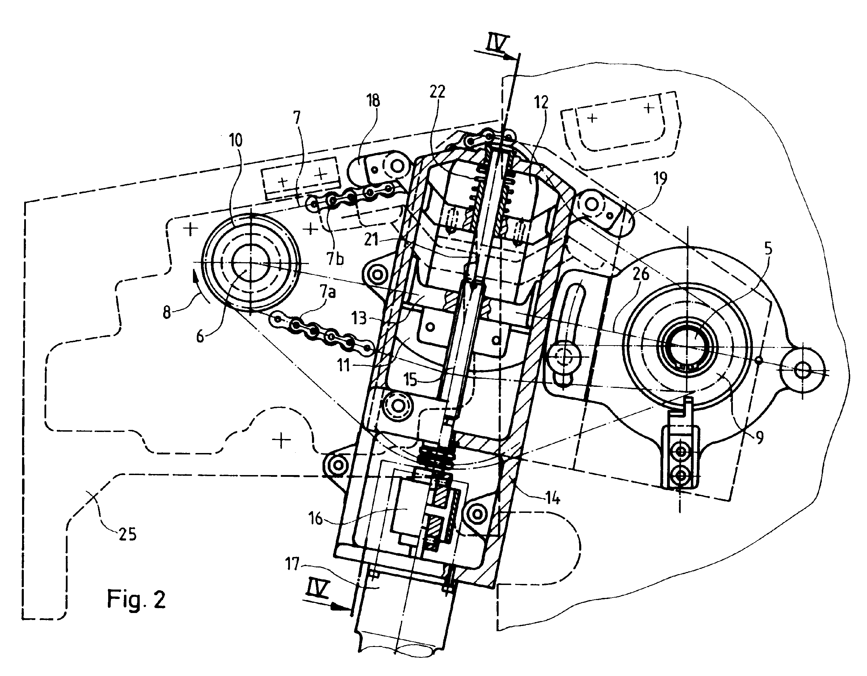

Die Welle 5 des Anlegers 1 wird durch die Welle 6 des Druckwerkes 2 mittels eines Zugmittels, insbesondere einer endlos umlaufenden Kette 7, in Richtung des in Figur 2 eingezeichneten Pfeiles 8 angetrieben, so daß sich an der Kette 7 ein Zugtrum 7a und ein Lostrum 7b ergibt. Etwa mittig zwischen dem Kettenrad 9 auf der Welle 5 und dem Kettenrad 10 auf der Welle 6 ist die Kette 7 mit dem Zugtrum 7a über ein Spannelement 11 und mit dem Lostrum 7b über ein Spannelement 12 geführt, die beide von innen gegen die Kette 7 wirksam sind. Die Spannelemente 11 und 12 sind Teile der Einstellvorrichtung zur Veränderung des Phasenwinkels zwischen der antreibenden Welle 6 und der getriebenen Welle 5. Beide Spannelemente sind in Spannrichtung vorteilhaft einstellbar an einem Schlitten 13 befestigt, der an einem gehäusefesten Rahmen 14 senkrecht zu einer die Achsen der Wellen 5 und 6 einschließenden Ebene beweglich geführt ist. Der Schlitten 13 ist mit einem zentral angeordneten Muttergewinde auf einer Spindel 15 verschraubbar, die in dem gehäusefesten Rahmen 14 von Hand oder motorisch verdrehbar ist. Das Ausführungsbeispiel zeigt eine Kupplung 16 für die Verbindung dieser Spindel 15 mit einem Verstellmotor 17, so daß die Spannelemente 11 und 12 durch motorische Verstellkräfte zum Zwecke der Einstellung der Phasenlage der Wellen 5 und 6 beweglich sind.

Für das Lostrum 7b der Kette 7 ist ein weiterer Kettenspanner mit zwei Spannelementen 18 und 19 vorgesehen, die von außen gegen das Lostrum 7b der Kette 7 wirken. Die beiden Spannelemente 18 und 19 dieses Kettenspanners sind an den freien Enden eines Joches 20 pendelbar gelagert. Dieses Joch 20 ist auf einer Verlängerung 21 der Spindel 15 beweglich geführt und mittels einer Feder 22 in Spannrichtung belastet, die sich einerseits gegen das Joch 20 und andererseits gegen ein gehäusefestes Stützlager abstützt. Die Spannung der Feder 22 bestimmt somit den Spanndruck der Spannelemente 18 und 19 von außen gegen das Lostrum 7b der Kette 7.

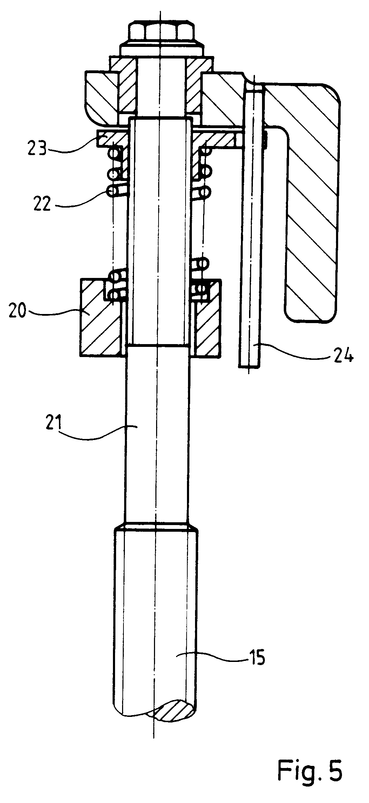

Bei dem Ausführungsbeispiel entsprechend Figur 5 wird die Einspannlänge der Feder 22 bei der Verstellung der Spannelemente 11 und 12 nicht verändert. Dies wird dadurch erreicht, daß die Verlängerung 21 der Spindel 15 mit einem Gewinde ein Muttergewinde des verstellbaren Widerlagers 23 durchgreift, welches durch eine Führung 24 gegen Verdrehung gesichert ist und sich somit nur axial verstellen läßt. Die Steigung des Gewindes auf der Verlängerung 21 weicht von der Steigung des Gewindes auf der Spindel 15 ab, so daß die Einspannlänge der Feder 22 und somit die Federkraft über den gesamten Verstellbereich nahezu konstant bleibt.

Durch die von außen unter Federspannung gegen das Lostrum 7b wirkenden Spannelemente 18 und 19 entsteht ein größerer Umschlingungswinkel des von innen gegen das Lostrum 7b wirkenden Spannelements 12, wodurch ein Kettenspeicher gebildet wird, der in beiden Verstellrichtungen über die Strecklage des Lostrums 7b hinaus wirksam ist.

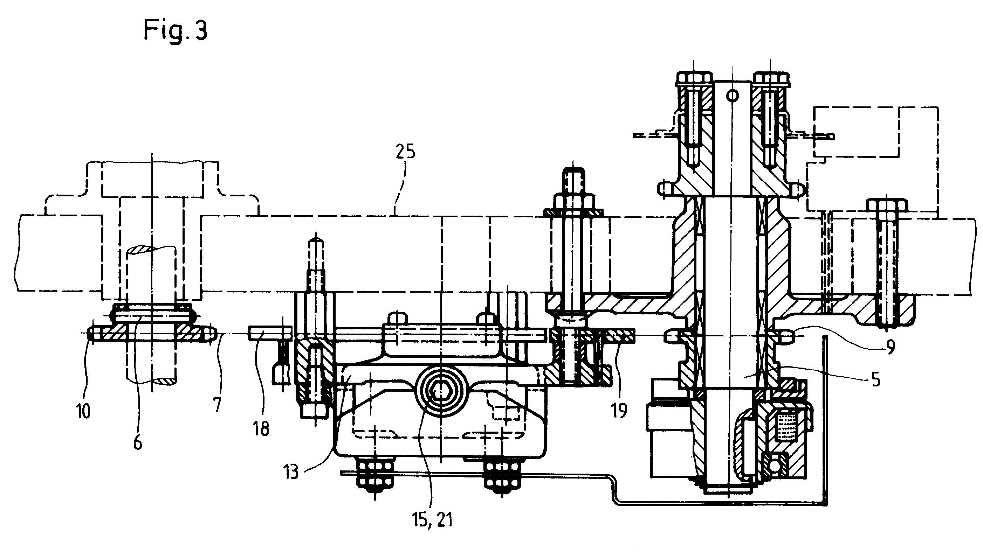

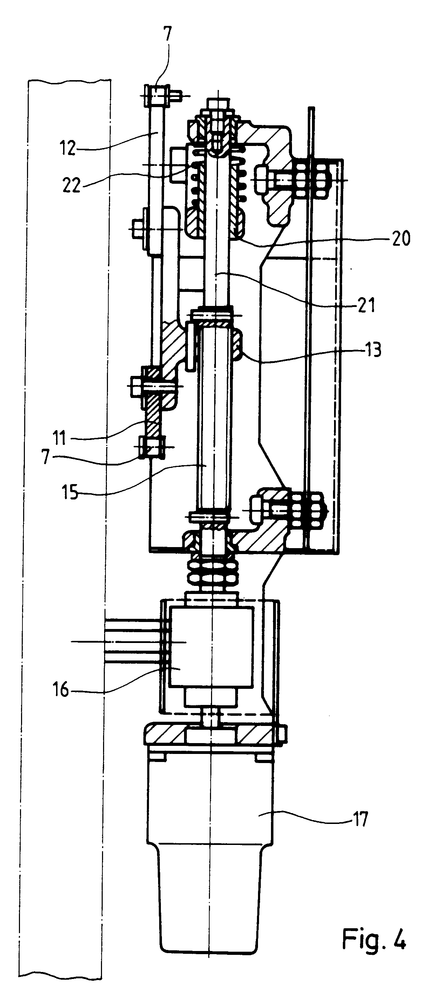

Es ergibt sich aus den Darstellungen der Figuren 3, 4 und 5, daß die Einstellvorrichtung für die Phasenlage auf der Antriebsseite außerhalb des Kettentriebes für die übertragung der Antriebskräfte von der Welle 6 des Druckwerks auf die Welle 5 des Anlegers angeordnet sind, so daß die Kette 7 zwischen den Bauteilen der Einstellvorrichtung und der Gehäusewand 25 umläuft. Die in die Umlaufebene der Kette 7 hineinragenden Spannelemente 11 und 12, welche von innen gegen das Zugtrum 7a bzw. gegen das Lostrum 7b wirksam sind, und der Spannelemente 18 und 19, von denen in Umlaufrichtung der Kette 7 je eines vor dem Spannelement 12 und eines hinter dem Spannelement 12 von außen gegen das Lostrum 7b der Kette 7 wirksam ist, sind jeweils an Kragarmen befestigt, wie es die Figur 3 verdeutlicht.

### BEZUGSZEICHENLISTE

- 1: Anleger
- 2: Druckwerk
- 3: Bogenstapel
- 4: Anlegetisch
- 5: Welle
- 6: Welle
- 7: Kette
- 7a: Zugtrum
- 7b: Lostrum
- 8: Pfeil
- 9: Kettenrad
- 10: Kettenrad
- 11: Spannelement
- 12: Spannelement
- 13: Schlitten
- 14: Rahmen
- 15: Spindel
- 16: Kupplung
- 17: Verstellmotor
- 18: Spannelement
- 19: Spannelement
- 20: Joch
- 21: Verlängerung
- 22: Feder
- 23: Widerlager
- 24: Führung
- 25: Gehäuse
- 26: Ebene

## Patentansprüche

1. Einstellvorrichtung zur Veränderung des Phasenwinkels zwischen einer Antriebswelle (6) und einer Abtriebswelle (5) eines Kettentriebes (7) zwischen einem Bogenanleger (1) und einem Druckwerk (2) einer Bogendruckmaschine, bestehend aus einem von innen gegen das Zugtrum (7a) wirksamen Spannelement (11) und einem von innen gegen das Lostrum (7b) wirksamen Spannelement (12), die beide an einem Schlitten (13) angeordnet sind, der zum Zwecke der Phaseneinstellung etwa senkrecht zu einer Ebene (26) verschiebbar ist, in der die Achsen beider Wellen liegen,
**dadurch gekennzeichnet**,
daß für das Lostrum (7b) ein zusätzlicher Kettenspanner vorgesehen ist, dessen Spannelemente (18,19) von außen gegen das Lostrum (7b) wirksam und gegenüber dem von innen wirksamen Spannelement (12) quer zur genannten Ebene (26) einstellbar beweglich sind.

2. Einstellvorrichtung nach Anspruch 1,
**dadurch gekennzeichnet**,
daß der Kettenspanner zwei Spannelemente (18,19) aufweist, die an den Enden eines gegenüber dem Schlitten (13) verstellbaren Joches (20) angeordnet sind und je auf einer Seite neben dem von innen wirksamen Spannelement (12) von außen gegen das Lostrum (7b) wirksam sind.

3. Einstellvorrichtung nach den Ansprüchen 1 und 2,
**dadurch gekennzeichnet**,
daß die Spannelemente (18,19) des von außen gegen das Lostrum (7b) wirksamen Kettenspanners durch eine in Spannrichtung wirkende Feder (22) belastet sind.

4. Einstellvorrichtung nach Anspruch 2 oder 3,
**dadurch gekennzeichnet**,
daß das die beiden von außen gegen das Lostrum (7b) wirksamen Spannelemente (18,19) tragende Joch (20) auf einer Spindel (15) quer zu der Ebene (26) durch die Achsen der Wellen (5,6) beweglich geführt ist und das ein Widerlager für eine Feder (22) bildet, dessen anderes Ende sich gegen ein Widerlager (23) am Gehäuse (25) abstützt.

5. Einstellvorrichtung nach Anspruch 4,
**dadurch gekennzeichnet**,
daß die Einspannlänge der Feder (22) zwischen dem Widerlager am Joch (20) und dem Widerlager (23) am Gehäuse (25) veränderbar ist.

6. Einstellvorrichtung nach Anspruch 5,
**dadurch gekennzeichnet**,
daß das Widerlager (23) am Gehäuse (25) verstellbar angeordnet ist.

7. Einstellvorrichtung nach Anspruch 5 oder 6,
**dadurch gekennzeichnet**,
daß das Widerlager (23) der Feder (22) am Gehäuse (25) mit einem Muttergewinde auf einem Bolzengewinde einer Verlängerung (21) der die Schlittenverstellung bewirkenden Spindel (15), und somit gegenüber dem Gehäuse (25) verstellbar, angeordnet ist, wobei das Gewinde des Widerlagers (23) eine vom Gewinde der Spindel (15) für die Schlittenverstellung abweichende Steigung aufweist.

## Claims

1. Adjusting device for changing the phase angle between a drive shaft (6) and an output shaft (5) of a chain drive (7) between a sheet feeder (1) and a printing unit (2) of a sheet-fed printing machine, consisting of a tensioning element (11) which is effective from the inside against the tight strand (7a) and a tensioning element (12) which is effective from the inside against the slack strand (7b), both elements being arranged on a slide (13) which is displaceable for the purpose of the phase adjustment approximately perpendicularly to a plane (26) in which the axes of both shafts lie, characterized in that there is provided for the slack strand (7b) an additional chain tensioner whose tensioning elements (18, 19) are effective from the outside against the slack strand (7b) and are movable relative to the tensioning element (12), which is effective from the inside, so as to be adjustable transversely to the said plane (26).

2. Adjusting device according to Claim 1, characterized in that the chain tensioner has two tensioning elements (18, 19) which are arranged at the ends of a yoke (20) which is adjustable relative to the slide (13) and are effective from the outside against the slack strand (7b) on each side next to the tensioning element (12) which is effective from the inside.

3. Adjusting device according to Claims 1 and 2, characterized in that the tensioning elements (18, 19) of the chain tensioner which is effective from the outside against the slack strand (7b) are loaded by a spring (22) acting in the tensioning direction.

4. Adjusting device according to Claim 2 or 3, characterized in that the yoke (20) bearing the two tensioning elements (18, 19) which are effective from the outside against the slack strand (7b) is guided movably on a spindle (15), transversely to the plane (26) through the axes of the shafts (5, 6), and forms an abutment for a spring (22), whose other end is supported against an abutment (23) on the housing (25).

5. Adjusting device according to Claim 4, characterized in that the tensioning length of the spring (22) between the abutment on the yoke (20) and the abutment (23) on the housing (25) is variable.

6. Adjusting device according to Claim 5, characterized in that the abutment (23) on the housing (25) is arranged so as to be adjustable.

7. Adjusting device according to Claim 5 or 6, characterized in that the abutment (23) of the spring (22) on the housing (25) having a nut thread is arranged on a bolt thread of an extension (21) of the spindle (15) causing the slide adjustment and is thus adjustable relative to the housing (25), the thread of the abutment (23) having a pitch which deviates from the thread of the spindle (15) for the slide adjustment.

## Revendications

1. Dispositif de réglage destiné à faire varier l'angle de phase entre un arbre moteur (6) et un arbre de sortie (5) d'une transmission à chaîne (7), entre un margeur de feuilles (1) et une unité d'impression (2), d'une machine à imprimer des feuilles, constitué d'un élément de tension (11) agissant de l'intérieur contre le brin en traction (7a), et un élément de tension (12), agissant de l'intérieur contre le brin libre (7b), tous deux étant montés sur un chariot (13) qui, en vue du réglage de phase, peut coulisser à peu près perpendiculairement à un plan (26) dans lequel se situent les axes des deux arbres, caractérisé en ce que pour le brin libre (7b) il est prévu un tendeur de chaîne supplémentaire dont les éléments de tension (18, 19) agissent de l'extérieur contre le brin libre (7b) et sont déplaçables, pour le réglage, transversalement au plan (26) cité, par rapport à l'élément de tension (12) agissant de l'intérieur.

2. Dispositif de réglage selon la revendication 1, caractérisé en ce que le tendeur de chaîne comporte deux éléments de tension (18, 19) qui sont montés aux extrémités d'une traverse (20), réglable par rapport au chariot (13), et qui agissent de l'extérieur contre le brin libre (7b), chacun sur un côté, à côté de l'élément de tension (12) agissant de l'intérieur.

3. Dispositif de réglage selon les revendications 1 et 2, caractérisé en ce que les éléments de tension (18, 19) du tendeur de chaîne agissant de l'extérieur contre le brin libre (7b), sont soumis à l'action d'un ressort (22) agissant dans le sens de la tension.

4. Dispositif de réglage selon les revendications 2 ou 3, caractérisé en ce que la traverse (20), portant les deux éléments de tension (18, 19), agissant de l'extérieur contre le brin libre (7b), est guidée mobile sur une broche (15), transversalement au plan (26) passant par les axes des arbres (5, 6) et qui forme une butée pour un ressort (22) dont l'autre extrémité prend appui contre une butée (23) du boîtier (25).

5. Dispositif de réglage selon la revendication 4, caractérisé en ce que la longueur de tension du ressort (22) est variable entre la butée de la traverse (20) et la butée (23) du boîtier (25).

6. Dispositif de réglage selon la revendication 5, caractérisé en ce que la butée (23) du boîtier (25) est réglable.

7. Dispositif de réglage selon les revendications 5 ou 6, caractérisé en ce que la butée (23) du ressort ( 22), sur le boîtier (25), est montée avec un filetage femelle sur un filetage mâle d'un prolongement (21) de la broche (15), provoquant le déplacement du chariot, et est donc réglable par rapport au boîtier (25), le filetage de la butée (23) présentant un pas différent de celui de la broche (15) pour le déplacement du chariot.
